# EUROPEAN PATENT SPECIFICATION

(11) **EP 3 252 755 B1**
(45) Date of publication and mention of the grant of the patent: **31.07.2019**
(21) Application number: 16767740.0
(22) Date of filing: 21.03.2016
(51) Int. Cl.: G06F 21/32, H04L 9/32, G10L 17/00, G06F 21/46, H04L 29/06, H04W 12/06, H04W 12/08, G10L 17/06, G10L 17/24, G10L 17/04

(54) **METHOD AND APPARATUS FOR MANAGING GRADED CIPHER**
VERFAHREN UND VORRICHTUNG ZUR VERWALTUNG EINER GESTUFTEN CHIFFRE
PROCÉDÉ ET APPAREIL DE GESTION DE CHIFFREMENT À GRADIENT

(30) Priority: 23.03.2015 CN 201510128223
(43) Date of publication of application: 06.12.2017
(73) Proprietor: ZTE Corporation, Shenzhen, Guangdong 518057 (CN)
(72) Inventor: YAO, Lizhe, Shenzhen Guangdong 518057 (CN); CHEN, Jun, Shenzhen Guangdong 518057 (CN); SHANG, Guoqiang, Shenzhen Guangdong 518057 (CN)
(74) Representative: CMS Cameron McKenna Nabarro Olswang LLP
(86) International application number: PCT/CN2016/076858
(87) International publication number: WO 2016/150363

(56) References cited:
- CN-A- 103 391 354
- CN-A- 103 427 990
- CN-A- 103 955 638
- CN-A- 104 036 196
- CN-A- 104 205 721
- US-A- 5 805 674
- US-A1- 2014 337 945

## Description

### Technical Field

The present invention relates to, but is not limited to, an encryption technology, and particularly to a method and apparatus for managing a graded cipher.

### Background

A method related for implementing voice encryption generally includes the following operations. A user inputs a voice password through a mobile phone; and a voiceprint characteristic parameter is obtained by adopting a Mel cepstrum technology. The user inputs the same password when logging in a system for the second time, and voiceprint information of a voice to be authenticated is simultaneously obtained by characteristic extraction. Finally, the voiceprint characteristic parameter and the voiceprint information of the voice to be authenticated are matched to obtain a credibility through a voiceprint authentication matching algorithm. An obtained credibility score is compared with a critical value, and an output result is "the owner" when the credibility score is smaller than the critical value, otherwise the obtained result is "not the owner". Therefore, an authentication process is completed.

In the method related for implementing voice encryption, after a voice cipher is recorded, the user is required to speak the whole voice for verification during verification with the voice password. Considering privacy and security, for the same application or verification, the user is required to set multiple different voice passwords for verification of different security grades. At present, during such graded cipher management, the user is required to input the multiple different voice passwords and remember a content of each voice password. It is very tedious for the user, and the user may easily forget or get confused, therefore a user experience is poorer.

US 5805674 A1 discloses a security arrangement, includes a computer processor unit coupled to a subscriber information memory to verify whether the user is an authorized user.

US 20140337945 A1 discloses a context-aware adaptive authentication method, comprises, determining a context for a user, adjusting automatically an authentication configuration for the user based at least in part on the context.

### Summary

The below is the summary of a subject described in detail in the document, and the summary is not intended to limit the scope of protection of the claims.

Embodiments of the present invention provide a method and apparatus for managing a graded cipher, which can simply implement user verification and improve a user experience.

An embodiment of the present invention provides a method for managing a graded cipher, which includes that:
a corresponding relationship between different security grades and corresponding voice passwords is established, herein a voice password corresponding to each security grade in the corresponding relationship is a part or all of a preset voice password; and
a voice password is received from a user, and the obtained corresponding relationship is searched for a security grade corresponding to a voice password matched with the received voice password.

In an exemplary embodiment, when a security grade in the corresponding relationship is higher, a length of a voice password corresponding to the security grade is larger.

In an exemplary embodiment, the step that a corresponding relationship between different security grades and corresponding voice passwords is established includes that:
the preset voice password and a security grade number are acquired in advance; and
a voice password, of which a length is (N-i)/N of a length of the preset voice password, from the preset voice password is acquired, and a corresponding relationship between the obtained voice password and an ith security grade is set;
herein N is the security grade number, and i is an integer more than or equal to 0.

In an exemplary embodiment, the step that a corresponding relationship between the obtained voice password and an ith security grade is set includes that:
a voiceprint characteristic of the obtained voice password is extracted, and a corresponding relationship between the voiceprint characteristic of the obtained voice password and the ith security grade is stored.

The step that the obtained corresponding relationship is searched for a security grade corresponding to a voice password matched with the received voice password includes that:
a voiceprint characteristic of the received voice password is acquired; and
the obtained corresponding relationship is searched for the security grade corresponding to a voiceprint characteristic of the voice password matched with the voiceprint characteristic of the received voice password.

An embodiment of the present invention further proposes a computer-readable storage medium, which stores a computer-executable instruction, and the computer-executable instruction is used to execute any method described above.

An embodiment of the present invention further proposes an apparatus for managing a graded cipher, which includes an acquisition module, a receiving module and a searching module.

The acquisition module is configured to establish a corresponding relationship between different security grades and corresponding voice passwords; herein a voice password corresponding to each security grade in the corresponding relationship is a part or all of a preset voice password.

The receiving module is configured to receive a voice password from a user.

The searching module is configured to search the obtained corresponding relationship for a security grade corresponding to a voice password matched with the received voice password.

In an exemplary embodiment, the acquisition module is configured to,
acquire the preset voice password and a security grade number,
acquire a voice password, of which a length is (N-i)/N of a length of the preset voice password, from the preset voice password, and set a corresponding relationship between the obtained voice password and an ith security grade; herein N is the security grade number, and i is an integer more than or equal to 0.

In an exemplary embodiment, the acquisition module is configured to,
acquire the preset voice password and a security grade number in advance; and
acquire a voice password, of which a length is (N-i)/N of a length of the preset voice password, from the preset voice password, extract a voiceprint characteristic of the obtained voice password, and store a corresponding relationship between the voiceprint characteristic of the obtained voice password and an ith security grade; herein N is the security grade number, and i is an integer more than or equal to 0.

The searching module is configured to,
acquire a voiceprint characteristic of the received third voice password, search the obtained corresponding relationship for the security grade corresponding to a voiceprint characteristic of the voice password matched with the voiceprint characteristic of the received voice password, and enter the searched security grade.

Compared with an existing art, the embodiment of the present invention includes that: the corresponding relationship between the different security grades and the corresponding voice passwords is established, herein the voice password corresponding to each security grade in the corresponding relationship is a part or all of the preset voice password; and the voice password is received from the user, and the obtained corresponding relationship is searched for the security grade corresponding to the voice password matched with the received voice password. By the solution of the embodiment of the present invention, the user is only required to input the preset voice password to obtain the voice passwords corresponding to the different security grades, and is not required to input multiple different voice passwords to implement verification of the different security grades. Therefore, user verification is simply implemented, so that a user experience is improved.

After the drawings and the detailed descriptions are read and understood, the other aspects can be understood.

### Brief Description of Drawings

FIG. 1 is a flowchart of a method for managing a graded cipher according to an embodiment of the present invention.
FIG. 2 is a structure diagram of an apparatus for managing a graded cipher according to an embodiment of the present invention.

### Detailed Description

For facilitating understanding of those skilled in the art, further descriptions, made below with reference to the drawings, about the present invention are not intended to limit the scope of protection of the present invention. It is important to note that the embodiments in the present application and various modes in the embodiments may be combined with each other without conflicts.

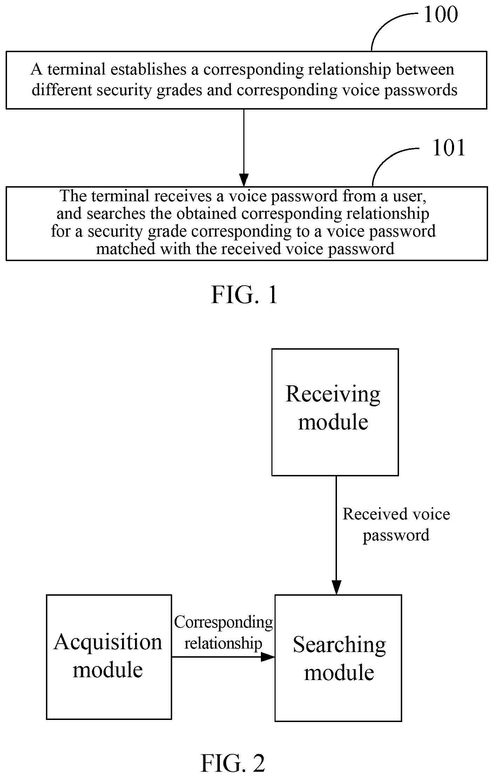

Referring to FIG. 1, an embodiment of the present invention proposes a method for managing a graded cipher, which includes the following steps 100-101.

In step 100, a terminal establishes a corresponding relationship between different security grades and corresponding voice passwords.

In the step, a voice password corresponding to each security grade in the corresponding relationship is a part or all of a preset voice password. For example, when a security grade is higher, a length of the corresponding voice password is larger.

In the step, the step of establishing the corresponding relationship between the different security grades and the corresponding voice passwords includes that: the preset voice password and a security grade number are acquired in advance; and a voice password of which a length is (N-i)/N of a length of the preset voice password is acquired from the obtained preset voice password, and a corresponding relationship between the obtained voice password and an ith security grade is set. Herein, N is the security grade number, and i is an integer more than or equal to 0.

In an embodiment, the preset voice password and the security grade number may be input by a user.

In an embodiment, when i is 0, it is indicated that the security grade is highest, and when i is 1, it is indicated that the security grade is the second highest, and so on.

In an embodiment, the step that the corresponding relationship between the obtained voice password and the ith security grade is set includes that: a voiceprint characteristic of the obtained voice password is extracted, and a corresponding relationship between the voiceprint characteristic of the obtained voice password and the ith security grade is stored.

In step 101, the terminal receives a voice password from a user, and searches the obtained corresponding relationship for a security grade corresponding to a voice password matched with the received voice password.

In the step, when a security grade corresponding to the voice password matched with the received voice password is not found in the corresponding relationship, the flow is ended.

In the step, the step of searching the obtained corresponding relationship for the security grade corresponding to the voice password matched with the received voice password includes that: a voiceprint characteristic of the received voice password is acquired; and the obtained corresponding relationship is searched for the security grade corresponding to a voiceprint characteristic of the voice password matched with the voiceprint characteristic of the received voice password.

In the step, judging whether the voiceprint characteristic of the received voice password is matched with the voiceprint characteristic of the voice password in the corresponding relationship belongs to general knowledge well known by those skilled in the art, and is not intended to limit the scope of protection of the present invention, and will not be elaborated herein.

The method of the abovementioned embodiment may be implemented by the terminal.

By the method of the embodiment of the present invention, the user is only required to input the preset voice password to obtain voice passwords corresponding to the different security grades, and is not required to input multiple different voice passwords to implement verification of the different security grades. Therefore, user verification is simply implemented, so that a user experience is improved.

In the method of the embodiment of the present invention, the user may set different security grades for an application or a system, and each security grade corresponds to different access rights and operating rights.

The method of the present invention will be described below in detail through specific implementation modes.

A first embodiment: a user records a preset voice password "Hello, Zhongxing" and a security grade number 2 indicating that there are two security grades. A 0^{th} security grade is a higher security grade, and a first security grade is a lower security grade.

A corresponding relationship between a length of a voice password and a security grade is as follows. A length of a voice password corresponding to the 0^{th} security grade is the same as a length of the preset voice password, that is, the user can be successfully verified only after speaking all contents of the recorded preset voice password. A length of a voice password corresponding to the first security grade is 1/2 of the length of the preset voice password, which indicates that the user can be successfully verified after the user needs to speak contents of 1/2 of the length of the input preset voice password.

After the preset voice password and the security grade number are received from the user, the preset voice password is truncated according to the length of the voice password corresponding to each security grade, that is, the first 1/2 "Hello" (or latter 1/2 "Zhongxing") of "Hello, Zhongxing" and 100% "Hello, Zhongxing" of "Hello, Zhongxing" are truncated.

Voiceprint characteristic extraction is performed on each truncated voice password, that is, voiceprint characteristic extractions are performed on "Hello" (or "Zhongxing") and "Hello, Zhongxing" respectively.

Voiceprint characteristics of the truncated voice passwords are stored, that is the voiceprint characteristics of "Hello" (or "Zhongxing") and "Hello, Zhongxing" are stored.

During verification with a voice, the user speaks "Hello" (or "Zhongxing"), and a voiceprint characteristic of a received voice password, i.e. the voiceprint characteristic of "Hello" (or "Zhongxing"), is extracted according to the received voice password.

The voiceprint characteristic of the received voice password is sequentially compared with the voiceprint characteristic, stored before, of each voice password, and it is found that the voiceprint characteristic is matched with the stored voiceprint characteristic of the voice password "Hello" (or "Zhongxing"), so that the verification succeeds, and the corresponding security grade 1 is entered.

A second embodiment: a user records a preset voice password "Hello, Zhongxing Telecommunication" and a security grade number 3 indicating that there are three security grades. A 0^{th} security grade is a higher security grade, and a first security grade is a lower security grade and a second security grade is a lowest security grade.

A corresponding relationship between a length of a voice password and a security grade is as follows. A length of a voice password corresponding to the 0^{th} security grade is the same as a length of the preset voice password, that is, the user can be successfully verified only after speaking all contents of the recorded preset voice password. A length of a voice password corresponding to the first security grade is 2/3 of the length of the preset voice password, which indicates that the user can be successfully verified after speaking contents of 2/3 of the length of the recorded preset voice password. A length of a voice password corresponding to the second security grade is 1/3 of the length of the preset voice password, which indicates that the user can be successfully verified after speaking contents of 1/3 of the length of the recorded preset voice password.

After the preset voice password and the security grade number are received from the user, the preset voice password is truncated according to the length of the voice password corresponding to each security grade, that is, the first 1/3 "Hello" (or the last 1/3 "Telecommunication") of "Hello, Zhongxing Telecommunication", the first 2/3 "Hello, Zhongxing" (or the last 2/3 "Zhongxing Telecommunication") of "Hello, Zhongxing Telecommunication" and 100% "Hello, Zhongxing Telecommunication" of "Hello, Zhongxing Telecommunication" are truncated.

Voiceprint characteristic extraction is performed on each truncated voice password, that is, voiceprint characteristic extractions are performed on "Hello" (or "Telecommunication"), "Hello, Zhongxing" (or "Zhongxing Telecommunication") and "Hello, Zhongxing Telecommunication" respectively.

Voiceprint characteristics of the truncated voice passwords are stored, that is the voiceprint characteristics of "Hello" (or "Telecommunication"), "Hello, Zhongxing" (or "Zhongxing Telecommunication") and "Hello, Zhongxing Telecommunication" are stored.

During verification with a voice, if the user speaks "Hello" (or "Telecommunication"), and a voiceprint characteristic of a received voice password, i.e. the voiceprint characteristic of "Hello" (or "Telecommunication"), is extracted according to the received voice password.

The voiceprint characteristic of the received voice password is sequentially compared with the voiceprint characteristic, stored before, of each voice password, and it is found that the voiceprint characteristic is matched with the stored voiceprint characteristic of the voice password "Hello" (or "Telecommunication"), so that the verification succeeds, and the corresponding security grade 2 is entered.

During verification with a voice, if the user speaks "Hello, Zhongxing" (or "Zhongxing Telecommunication"), and a voiceprint characteristic of a received voice password, i.e. the voiceprint characteristic of "Hello, Zhongxing" (or "Zhongxing Telecommunication"), is extracted according to the received voice password.

The voiceprint characteristic of the received voice password is sequentially compared with the voiceprint characteristic, stored before, of each voice password, and it is found that the voiceprint characteristic is matched with the stored voiceprint characteristic of the voice password "Hello, Zhongxing" (or "Zhongxing Telecommunication"), so that the verification succeeds, and the corresponding security grade 1 is entered.

During verification with a voice, if the user speaks "Hello, Zhongxing Telecommunication", a voiceprint characteristic of a received voice password, i.e. the voiceprint characteristic of "Hello, Zhongxing Telecommunication", is extracted according to the received voice password.

The voiceprint characteristic of the received voice password is sequentially compared with the voiceprint characteristic, stored before, of each voice password, and it is found that the voiceprint characteristic is matched with the stored voiceprint characteristic of the voice password "Hello, Zhongxing Telecommunication", so that the verification succeeds, and the corresponding security grade 0 is entered.

An embodiment of the present invention further proposes a computer-readable storage medium, which stores a computer-executable instruction, and the computer-executable instruction is used to execute any method described above.

Referring to FIG. 2, an embodiment of the present invention further proposes an apparatus for managing a graded cipher, which may be arranged in a terminal and includes an acquisition module, a receiving module and a searching module.

The acquisition module is configured to establish a corresponding relationship between different security grades and corresponding voice passwords; herein a voice password corresponding to each security grade in the corresponding relationship is a part or all of a preset voice password.

The receiving module is configured to receive a voice password from a user.

The searching module is configured to search the obtained corresponding relationship for a security grade corresponding to a voice password matched with the received voice password.

In the apparatus of the embodiment of the present invention, the acquisition module is configured to,
acquire the preset voice password and a security grade number in advance; and
acquire a voice password, of which a length is (N-i)/N of a length of the preset voice password, from the preset voice password, and set a corresponding relationship between the obtained voice password and an ith security grade; herein N is the security grade number, and i is an integer more than or equal to 0.

In the apparatus of the embodiment of the present invention, the acquisition module is configured to,
acquire the preset voice password and the security grade number in advance; and
acquire the voice password, of which the length is (N-i)/N of the length of the preset voice password, from the preset voice password, extract a voiceprint characteristic of the obtained voice password, and store a corresponding relationship between the voiceprint characteristic of the obtained voice password and the ith security grade; herein N is the security grade number, and i is an integer more than or equal to 0.

The searching module is configured to,
acquire a voiceprint characteristic of the received voice password, search the obtained corresponding relationship for the security grade corresponding to a voiceprint characteristic of the voice password matched with the voiceprint characteristic of the received voice password, and enter the searched security grade.

Those skilled in the art can understand that all or part of the steps of the abovementioned method may be implemented by instructing related hardware (such as a processor) through a program, and the program may be stored in a computer-readable storage medium, such as a read-only memory, a magnetic disk or an optical disk or the like. In an exemplary embodiment, all or part of the steps of the abovementioned embodiments may also be implemented by virtue of one or more integrated circuits. Correspondingly, various modules/units in the abovementioned embodiments may be implemented by adopting a hardware form, for example, corresponding functions are implemented through the integrated circuits, and may also be implemented by adopting a software function module form, for example, the corresponding functions are realized by executing programs/instructions stored in a memory or storage through the processor. The present invention is not limited to a hardware and software combination in any specific form.

It is important to note that the abovementioned embodiments are not intended to limit the scope of protection of the present invention but only to facilitate understanding of those skilled in the art, and any apparent replacements, improvements and the like made to the present invention by those skilled in the art without departing from the inventive concept of the present invention shall fall within the scope of protection of the present invention.

### Industrial Applicability

The abovementioned technical solutions simply implement user verification, thereby improving a user experience.

## Claims

1. A method for managing a graded cipher, **characterized by** comprising:
establishing a corresponding relationship between different security grades and corresponding voice passwords, wherein a voice password corresponding to each security grade in the corresponding relationship is a part or all of a preset voice password (100);
receiving a voice password from a user, and searching the obtained corresponding relationship for a security grade corresponding to a voice password matched with the received voice password (101), and
entering the corresponding security grade; wherein the establishing a corresponding relationship between different security grades and corresponding voice passwords comprises:
acquiring the preset voice password and a security grade number in advance; and
acquiring a voice password, of which a length is (N-i)/N of a length of the preset voice password, from the preset voice password, and setting a corresponding relationship between the obtained voice password and an ith security grade;
wherein N is the security grade number, and i is an integer more than or equal to 0.

2. The method according to claim 1, wherein when a security grade in the corresponding relationship is higher, a length of a voice password corresponding to the security grade is larger.

3. The method according to claim 1, wherein the setting a corresponding relationship between the obtained voice password and an ith security grade comprises:
extracting a voiceprint characteristic of the obtained voice password, and storing a corresponding relationship between the voiceprint characteristic of the obtained voice password and the ith security grade;
the searching the obtained corresponding relationship for a security grade corresponding to a voice password matched with the received voice password comprises:
acquiring a voiceprint characteristic of the received voice password; and
searching the obtained corresponding relationship for the security grade corresponding to a voiceprint characteristic of the voice password matched with the voiceprint characteristic of the received voice password.

4. An apparatus for managing a graded cipher, **characterized by** comprising:
an acquisition module, configured to establish a corresponding relationship between different security grades and corresponding voice passwords, wherein a voice password corresponding to each security grade in the corresponding relationship is a part or all of a preset voice password;
a receiving module, configured to receive a voice password from a user; and
a searching module, configured to search the obtained corresponding relationship for a security grade corresponding to a voice password matched with the received voice password, and enter the corresponding security grade; wherein the acquisition module is configured to,
acquire the preset voice password and a security grade number in advance; and
acquire a voice password, of which a length is (N-i)/N of a length of the preset voice password, from the preset voice password, and set a corresponding relationship between the obtained voice password and an ith security grade; wherein N is the security grade number, and i is an integer more than or equal to 0.

5. The apparatus according to claim 4, wherein the acquisition module is configured to,
acquire the preset voice password and a security grade number in advance; and
acquire a voice password, of which a length is (N-i)/N of a length of the preset voice password, from the preset voice password, extract a voiceprint characteristic of the obtained voice password, and store a corresponding relationship between the voiceprint characteristic of the obtained voice password and an ith security grade; wherein N is the security grade number, and i is an integer more than or equal to 0; and
the searching module is configured to,
acquire a voiceprint characteristic of the received third voice password, search the obtained corresponding relationship for the security grade corresponding to a voiceprint characteristic of the voice password matched with the voiceprint characteristic of the received voice password.

6. A computer-readable storage medium, storing a computer-executable instruction, the computer-executable instruction being used to execute the method according to any one of claims 1-3.

## Patentansprüche

1. Verfahren zum Verwalten eines gestuften Schlüssels, **dadurch gekennzeichnet, dass** es Folgendes umfasst:
Aufbauen einer entsprechenden Beziehung zwischen verschiedenen Sicherheitsstufen und entsprechenden Stimmkennwörtern, wobei ein Stimmkennwort, das jeder Sicherheitsstufe in der entsprechenden Beziehung entspricht, ein Teil eines voreingestellten Stimmkennworts (100) oder das gesamte dessen ist;
Empfangen eines Stimmkennworts von einem Benutzer, und Durchsuchen der erhaltenen entsprechenden Beziehung nach einer Sicherheitsstufe, die einem Stimmkennwort entspricht, das mit dem empfangenen Stimmkennwort (101) übereinstimmt, und Eingeben der entsprechenden Sicherheitsstufe;
wobei das Aufbauen einer entsprechenden Beziehung zwischen verschiedenen Sicherheitsstufen und entsprechenden Stimmkennwörtern umfasst:
Erfassen des voreingestellten Stimmkennworts und einer Sicherheitsstufenzahl im Voraus; und
Erfassen eines Stimmkennworts, dessen Länge (N-i)/N einer Länge des voreingestellten Stimmkennworts ist, aus dem voreingestellten Stimmkennwort, und Einstellen einer entsprechenden Beziehung zwischen dem erhaltenen Stimmkennwort und einer i-ten Sicherheitsstufe;
wobei N die Sicherheitsstufenzahl ist und i eine ganze Zahl ist, die wenigstens 0 ist.

2. Verfahren nach Anspruch 1, wobei, wenn eine Sicherheitsstufe in der entsprechenden Beziehung höher ist, eine Länge eines Stimmkennworts, das der Sicherheitsstufe entspricht, größer ist.

3. Verfahren nach Anspruch 1, wobei das Einstellen einer entsprechenden Beziehung zwischen dem erhaltenen Stimmkennwort und einer i-ten Sicherheitsstufe Folgendes umfasst:
Auswählen einer Stimmabdruckeigenschaft des erhaltenen Stimmkennworts, und Speichern einer entsprechenden Beziehung zwischen der Stimmabdruckeigenschaft des erhaltenen Stimmkennworts und der i-ten Sicherheitsstufe;
Durchsuchen der erhaltenen entsprechenden Beziehung nach einer Sicherheitsstufe, die einem Stimmkennwort entspricht, das mit dem empfangenen Stimmkennwort übereinstimmt, umfassend:
Erfassen einer Stimmabdruckeigenschaft des empfangenen Stimmkennworts; und
Durchsuchen der erhaltenen entsprechenden Beziehung nach der Sicherheitsstufe, die einer Stimmabdruckeigenschaft des Stimmkennworts entspricht, die mit der Stimmabdruckeigenschaft des empfangenen Stimmkennworts übereinstimmt.

4. Einrichtung zum Verwalten eines gestuften Schlüssels, **dadurch gekennzeichnet, dass** sie Folgendes umfasst:
ein Erfassungsmodul, das konfiguriert ist, um eine entsprechende Beziehung zwischen verschiedenen Sicherheitsstufen und entsprechenden Stimmkennwörtern aufzubauen, wobei ein Stimmkennwort, das jeder Sicherheitsstufe in der entsprechenden Beziehung entspricht, ein Teil des voreingestellten Stimmenkennworts oder das gesamte dessen ist;
ein Empfangsmodul, das konfiguriert ist, um ein Stimmkennwort von einem Benutzer zu empfangen; und
ein Durchsuchungsmodul, das konfiguriert ist, um die erhaltene entsprechende Beziehung nach einer Sicherheitsstufe zu durchsuchen, die einem Stimmkennwort entspricht, das mit dem empfangenen Stimmkennwort übereinstimmt, und um die entsprechende Sicherheitsstufe einzugeben;
wobei das Erfassungsmodul konfiguriert ist, um das voreingestellte Stimmkennwort und eine Sicherheitsstufenzahl im Voraus zu erfassen; und
um ein Stimmkennwort zu erfassen, dessen Länge (N-i)/N einer Länge des voreingestellten Stimmkennworts ist, aus dem voreingestellten Stimmkennwort, und um eine entsprechende Beziehung zwischen dem erhaltenen Stimmkennwort und einer i-ten Sicherheitsstufe festzulegen;
wobei N die Sicherheitsstufenzahl ist und i eine ganze Zahl ist, die wenigstens 0 ist.

5. Einrichtung nach Anspruch 4, wobei das Erfassungsmodul konfiguriert ist, um das voreingestellte Stimmkennwort und eine Sicherheitsstufenzahl im Voraus zu erfassen; und
ein Stimmkennwort zu erfassen, dessen Länge (N-i)/N einer Länge des voreingestellten Stimmkennworts ist, aus dem voreingestellten Stimmkennwort, eine Stimmabdruckeigenschaft des erhaltenen Stimmkennworts auszuwählen und eine entsprechende Beziehung zwischen der Stimmabdruckeigenschaft des erhaltenen Stimmkennworts und einer i-ten Sicherheitsstufe zu speichern;
wobei N die Sicherheitsstufenzahl ist und i eine ganze Zahl ist, die wenigstens 0 ist; und
das Durchsuchungsmodul konfiguriert ist, um eine Stimmabdruckeigenschaft des empfangenen dritten Stimmkennworts zu erfassen, die erhaltene entsprechende Beziehung nach der Sicherheitsstufe, die einer Stimmabdruckeigenschaft des Stimmkennworts entspricht, die mit der Stimmabdruckeigenschaft des empfangenen Stimmkennworts übereinstimmt, zu durchsuchen.

6. Computerlesbares Speichermedium, das eine von einem Computer ausführbare Anweisung speichert, wobei die von einem Computer ausführbare Anweisung genutzt wird, um das Verfahren nach einem der Ansprüche 1-3 auszuführen.

## Revendications

1. Procédé de gestion de chiffrement à gradient, **caractérisé en ce qu'**il comprend :
l'établissement d'une relation correspondante entre différents niveaux de sécurité et des mots de passe vocaux correspondants, dans lequel un mot de passe vocal correspondant à chaque niveau de sécurité dans la relation correspondante est une partie ou la totalité d'un mot de passe vocal préréglé (100) ;
la réception d'un mot de passe vocal d'un utilisateur, et la recherche de la relation correspondante obtenue pour un niveau de sécurité correspondant à un mot de passe vocal associé au mot de passe vocal reçu (101), et l'entrée du niveau de sécurité correspondant ;
dans lequel l'établissement d'une relation correspondante entre différents niveaux de sécurité et des mots de passe vocaux correspondants comprend :
l'acquisition du mot de passe vocal préréglé et d'un numéro de niveau de sécurité à l'avance ; et
l'acquisition d'un mot de passe vocal, dont une longueur est (N-i)/N d'une longueur du mot de passe vocal préréglé, à partir du mot de passe vocal préréglé, et le réglage d'une relation correspondante entre le mot de passe vocal obtenu et un ième niveau de sécurité ;
dans lequel N est le numéro du niveau de sécurité, et i est un entier supérieur ou égal à 0.

2. Procédé selon la revendication 1, dans lequel, lorsqu'un niveau de sécurité dans la relation correspondante est supérieur, une longueur d'un mot de passe vocal correspondant au niveau de sécurité est plus grande.

3. Procédé selon la revendication 1, dans lequel le réglage d'une relation correspondante entre le mot de passe vocal obtenu et un ième niveau de sécurité comprend :
l'extraction d'une caractéristique d'empreinte vocale du mot de passe vocal obtenu, et le stockage d'une relation correspondante entre la caractéristique d'empreinte vocale du mot de passe vocal obtenu et le ième niveau de sécurité ;
la recherche, dans la relation correspondante obtenue, d'un niveau de sécurité correspondant à un mot de passe vocal associé au mot de passe vocal reçu comprenant :
l'acquisition d'une caractéristique d'empreinte vocale du mot de passe vocal reçu ; et
la recherche, dans la relation correspondante obtenue, du niveau de sécurité correspondant à une caractéristique d'empreinte vocale du mot de passe vocal associée à la caractéristique d'empreinte vocale du mot de passe vocal reçu.

4. Appareil de gestion de chiffrement à gradient, **caractérisé en ce qu'**il comprend :
un module d'acquisition, configuré pour établir une relation correspondante entre différents niveaux de sécurité et des mots de passe vocaux correspondants, dans lequel un mot de passe vocal correspondant à chaque niveau de sécurité dans la relation correspondante est une partie ou la totalité d'un mot de passe vocal préréglé ;
un module de réception, configuré pour recevoir un mot de passe vocal d'un utilisateur ; et
un module de recherche, configuré pour rechercher dans la relation correspondante obtenue un niveau de sécurité correspondant à un mot de passe vocal associé au mot de passe vocal reçu, et entrer le niveau de sécurité correspondant ; dans lequel le module d'acquisition est configuré pour
acquérir le mot de passe vocal préréglé et un numéro de niveau de sécurité à l'avance ; et
acquérir un mot de passe vocal, dont une longueur est (N-i)/N d'une longueur du mot de passe vocal préréglé, à partir du mot de passe vocal préréglé, et régler une relation correspondante entre le mot de passe vocal obtenu et un ième niveau de sécurité ; dans lequel N est le numéro du niveau de sécurité, et i est un entier supérieur ou égal à 0.

5. Appareil selon la revendication 4, dans lequel le module d'acquisition est configuré pour acquérir le mot de passe vocal préréglé et un numéro de niveau de sécurité à l'avance ; et
acquérir un mot de passe vocal, dont une longueur est (N-i)/N d'une longueur du mot de passe vocal préréglé, à partir du mot de passe vocal préréglé, extraire une caractéristique d'empreinte vocale du mot de passe vocal obtenu, et stocker une relation correspondante entre la caractéristique de l'empreinte vocale du mot de passe vocal obtenu et un ième niveau de sécurité ;dans lequel N est le numéro du niveau de sécurité, et i est un entier supérieur ou égal à 0 ; et
le module de recherche est configuré pour
acquérir une caractéristique d'empreinte vocale du troisième mot de passe vocal reçu, et rechercher, dans la relation correspondante obtenue, le niveau de sécurité correspondant à une caractéristique d'empreinte vocale du mot de passe vocal associé à la caractéristique d'empreinte vocale du mot de passe vocal reçu.

6. Support de stockage lisible par ordinateur, stockant une instruction exécutable par ordinateur, l'instruction exécutable par ordinateur étant utilisée pour exécuter le procédé selon l'une quelconque des revendications 1 à 3.
